# EUROPEAN PATENT SPECIFICATION

(11) **EP 0 871 596 B1**
(45) Date of publication and mention of the grant of the patent: **28.08.2002**
(21) Application number: 96916095.1
(22) Date of filing: 17.05.1996
(51) Int. Cl.: C02F 3/34, C11D 3/386

(54) **USE OF MANNANASES AS SLIME CONTROL AGENTS**
VERWENDUNG VON MANNANASES ALS SCHLEIMKONTROLLMITTEL
UTILISATION DE MANNANASES EN TANT QU'AGENTS DE LUTTE CONTRE LES DEPOTS GELATINEUX

(30) Priority: 19.05.1995 EP 95250120
(43) Date of publication of application: 21.10.1998
(73) Proprietor: BetzDearborn Inc, Trevose, PA 19053-6783 (US)
(72) Inventor: VAN PEE, Kristine, Laura, Ignatius, B-9880 Aalter (BE); VAN SPEYBROECK, Michel, M., P., B-9000 Gent (BE); VAN POELE, Jozef, B-2140 Borgerhout (BE)
(74) Representative: UEXKÜLL & STOLBERG
(86) International application number: EP9602100
(87) International publication number: WO96036569

(56) References cited:
- EP-A- 0 590 746
- PATENT ABSTRACTS OF JAPAN vol. 018, no. 639 (C-1282), 6 December 1994 & JP,A,06 246257 (SANYO CHEM IND LTD), 6 September 1994,

## Description

The present invention relates to a composition for the prevention and/or removal of biofilm on surfaces (anti-biofilm composition) comprising at least one mannanase, optionally in combination with at least one enzyme from the group consisting of proteases, lipases, glycoproteases, wherein the composition does not comprise nigeranase, α-mannanase and pullulanase, and the use of the composition for the prevention and/or the removal of biofilm from surfaces.

Attachment of micro-organisms to solid surfaces is common in fluid systems. Generally this phenomenon is termed biofouling. Fouling biofilm accumulation is the result of processes involving: 1) transport of material from the bulk fluid to the surface and subsequent attachment, 2) microbial metabolism within the biofilm, 3) fluid shear stress at the film surface, 4) surface material and roughness, 5) fouling control procedures.

Problems associated with biofilm formation in different industrial processes are energy losses, material deterioration and reduced process effectiveness. Energy losses mean reduced heat exchanging capacity in cooling towers and increased power consumption in fluid distribution systems and in shipping industry. Material deterioration, caused by the biofilm layer next to the solid surface, means corrosion and rot. Reduced process effectiveness is seen in water treatment, pulp and paper industry and water quality data collection.

Health care also is involved with biofouling, e.g. formation of dental plaque, attachment of microbial cells to eukaryotic tissues causing disease, quality of drinking water, release of pathogenic organisms from biofilms into industrial water systems. Industrial process- or operating-water systems, such as e.g. open or closed water-cycle systems of paper factories or cooling-water systems, offer suitable conditions for the growth of microorganisms, with the result that a slime known as biofilm is formed on surfaces of water-bearing systems. In the case of cooling-water systems in particular, these biofilm deposits can lead to a reduced heat exchange, damage to the joints of pipelines and corrosion within the systems. In this way adverse effects on process control are possible, which can reduce the efficiency of the industrial process in question or impair product quality. In addition to this, biofilm or slime deposits generally lead to higher energy consumption. Most affected by increased biofilm formation are industrial processes such as the manufacture of pulp, paper, board and textiles. In the case of paper machines for example, fairly large quantities of water are recirculated in cycle systems called "white water systems" (primary or secondary cycle, i.e. white water I or II). The white water which contains dispersed pulp forms an ideal culture medium for the growth of microorganisms.

Apart from industrial water-bearing systems, biofilm formation also occurs on surfaces in other environments, such as on ultrafiltration and dialysis membranes in health care. Within the scope of the invention the enzymatic composition can be utilized for slime prevention and removal in any system in which biofilm formation occurs.

Biofilm or slime are formed by bacteria, in particular gram-negative bacteria, such as *Pseudamonas, Aclnetobacter* and *Aerobacter* plus *Flavobacterium, Desulfovibrio, Escherichia, Sphaerotilus, Enterobacter* and *Sarcina.* The cell-wall structure of gram-negative bacteria is a factor which contributes particularly to slime formation. The cell wall comprises peptidoglycan, which consists of acetyl amino sugars and amino acids plus an outer membrane composed of proteins, lipopolysaccharides and lipoproteins. In contrast, the cell wall of gram-positive bacteria, e.g. *Bacillus,* is mostly composed of peptidoglycan and teichoic acids.

Biofilm is further produced by fungi and yeasts, such as *Pullularia pullulans, Alternaria sp, Lenzytes, Lentinus, Polyporus, Fomes, Sterium, Aspergillus, Fusarium, Penicillium, Candida, Saccharomyces* and *Basidomycetes*.

A biofilm can comprise a variety of micro-organisms. Within a biofilm species of gram-negative and gram-positive bacteria, fungi, and if light is available as on cooling tower slats, algae are found. Development of a biofilm is initiated by the concentration of organic molecules, i.e. lipids, proteins, sugars on an inert surface. Attraction of micro-organisms to this layer and subsequent adhesion through exopolymers then occurs. The attached micro-organisms then form discrete microcolonies. When after a while more colonies grow into each other, a true biofilm is formed. The biofilm becomes thicker until a steady state is reached: attraction of micro-organisms from fluid to the existing biofilm is compensated by the shearing of micro-organisms from biofilm to flowing fluid.

The thickness of a biofilm increases with substrate concentration. Within a thick biofilm certain regions may be depleted of nutrients resulting in weak structures. These weak spots can detach creating holes in the biological matrix. Subsequent action of flow on these holes can detach more material leaving a thin biofilm. As the biofilm becomes thicker, an anaerobic area near to the surface develops. In this area microbes are able to destruct the surface.

Generally, micro-organisms in biofilm are surrounded by copious amounts of extracellular biopolymers termed glycocalyx. The glycocalyx is defined as "any polysaccharide, containing bacterial surface structure that is distal to the surface of the outer membrane of gram-negative bacteria, or to the surface of the peptidoglycan layer of gram-positive bacteria". The glycocalyx can consist of regularly arranged glycoproteins, termed Slayer, at the cell wall, or of a fibrous polysaccharide matrix, capsule, at the cell surface that may partially be shed into the menstruum. This capsule can be highly organized. Sometimes it is seen that the polysaccharide capsule surrounding the microbe is not covalently attached to the cell surface. Pelleting the cells then leaves the glycocalyx in the supernatant.

Glycocalyx-enclosed microcolonies are formed by cell replication occurring so that both daughter cells are trapped within the same glycocalyx. Intermolecular binding of glycocalyx biopolymers is affected by divalent cations. Chelation of these cations with EDTA is effective in detaching biofilm.

Several workers have drawn a general conclusion concerning the function of the bacterial glycocalyx as known today. It has a function
1) in adhesion of cells to solid surfaces or to other, prokaryotic or eukaryotic cells and
2) in trapping organic nutrients from the medium.
3) A capsule can be sufficiently highly organized to exclude particles and so protect the micro-organism from the environment. One can think of the glycocalyx as a first defensive wall against antibiotics, antibodies, bacteriophages.

Biofilms seldom consist of microbial material alone. Often inorganics are part of the slime, e.g. CaCO₃, alumina, silica, iron, magnesium, copper. In paper mills a lot of material can be included in the film, e.g. fibres, fillers, pitch, rosin size etc.

The deposition of bacterial slimes can effectively be controlled with biocides, the effect of these biocides being based on the fact that they kill the microorganisms in the operating water and thus prevent slime production. However, biofilm producing bacteria are far more resistant to toxicants than planctonic bacteria. Therefore, very high concentrations of biocides are necessary to remove biofilm. This is because biofilm cells are slow-growing and metabolically less active and because they are protected by their glycocalyx, which cannot only act as an ionexchange resin immobilizing toxicants, but also as a hydrophobic/hydrophilic barrier, preventing that biocides reach the cell. Further, biocides raise many doubts on ecological grounds and, because of their toxicity, create considerable problems when handled. For this reason, alternative ways of eliminating biofilm were sought in the past, with particular attention being paid to enzymes.

Although the biofilm matrix can have a heterogeneous composition, it is primarily built up from polysaccharides. Research in the field of slime removal has thus concentrated in particular on studies of polysaccharidases (carbohydrases). The use of enzymes, in particular carbohydrases, to degrade the glycocalyx and thus to remove biofilm or to prevent slime formation in industrial water systems is well known in the art.

Several approaches have already been suggested for this purpose, based on the different views with respect to the composition of industrial slime or biofilm, respectively.

A first approach is the use of a lytic enzyme, not active against the excreted polysaccharides in the slime, but against polysaccharides in the cell walls. These enzymes thus destroy cell walls and kill bacteria. For example, in DE 37 41 583, the use of a mixture consisting of glucanase and protease having lytic enzyme activity against 1,3-glucose linkages in the cell walls is disclosed. However, the slime layer protecting the bacterial cells can prevent the enzymes to reach the cell walls.

A second approach considers industrial slime as being composed of a single polysaccharide type, produced by one bacterial species. For example, in US 3,824,184 and US 3,773,623 the use of a levan hydrolase, which breaks down levan, produced by a wide variety of bacteria, is disclosed. Levan is, however, only produced by bacteria growing on sucrose. With regard to paper mills or cooling systems, it is unlikely that sucrose is present in significant amounts, so that levan will not be an important component of biofilms.

CA 1,274,442 and WO 90/02794 disclose the use of the enzyme alginate lyase, degrading alginate which is produced mainly by *Pseudomonas* spp. Further, industrial slime is always produced by a population consisting of different microorganisms, which can vary depending on the industrial site. Since each microorganism produces its own typical exopolysaccharide pattern (EPS), industrial slime will never be composed of one single polysaccharide.

In US 4,055,467 the use of a pentosanase-hexosanase for preventing biofilm formation in a cooling tower has been disclosed.

A third approach starts from the fact that a lot of different heteropolysaccharides are present in industrial slime. It is well known in the art that these polysaccharides are mainly composed of glucose, galactose, mannose, fucose, rhamnose, ribose, glucosamine, galactosamine, mannuronic acid, galacturonic acid and glucuronic acid in a very complex arrangement (cf. L. Kenne et al. in G. Aspinall (ed.) "The Polysaccharides", vol. II (1982), Academic Press; I.W. Sutherland in "Surface Carbohydrates of the Procaryotic Cell", Academic Press, London, 1977, 27-96). Further, numerous other sugar components are present in smaller quantities.

Therefore, it could be assumed that a lot of different enzyme activities are to be combined to have some effect on industrial slime. The knowledge of the monosaccharide composition of slime is, however, not sufficient for the definition of an enzyme mixture which is successful to remove biofilm. The monosaccharides mentioned above can be linked in numerous different ways. Glucose for instance can be alpha-1,2, alpha-1,3, alpha-1,4, alpha-1,6, beta-1,2, beta-1,3, beta-1,4 or beta-1,6 linked. For each of these a separate enzymatic activity could be added to influence slime. Also the adjacent monosaccharide and the sequence as such or substitutents on the respective saccharides are very important for the activity of a certain carbohydrase.

Further, one would normally expect that a single carbohydrase, with one of the many possible activities against one of the main saccharide building blocks of the EPS, or even a mixture of a few carbohydrases, would have no or only a very limited effect on this complex mixture of heteropolysaccharides. It has been found in the art that more or less complex mixtures develop a positive effect on the degradation of heteropolysaccharides. US 5,071,765 and EP-A-0 388 115 relate to the use of mixtures of cellulase, alpha-amylase and a protease, respectively, attacking beta- and alpha-1,4-linked glucose and extracellular protein.

In US 5,238,572 a combination of enzymes selected from the group consisting of galactosidase, galacturonidase, rhamnosidase, xylosidase, fucosidase, arabinosidase and alpha-glucosidase is disclosed.

JP-A-06246257 discloses a composition for removing slime comprising an α-glycan decomposing enzyme selected from the group of nigeranase, α-mannanase and pullulanase.

A fourth approach to prevent biofilm formation is to control the initial step of slime formation, i.e. the adhesion of bacteria. In EP-A-0 425 017 it is disclosed that microorganisms are bound to a surface, in part, by linkages reactive with Type II endoglycosidases. This type of enzymes (endo-beta-N-acetylglucosaminidases, endo-alpha-N-acetylgalactosaminidases and endo-beta-N-acetylgalactosidases) are capable of cleaving specific internal glycosidic linkages found in glycoproteins. It is known that some of these enzymes are also lytic.

Many different enzymatic methods have been proposed in the art for the removal of biofilm or biofilm prevention which either required a combination of numerous enzymes or, as far as only one or few enzymes were used, these had only a limited range of action. In addition, these approaches failed to provide a composition which, apart from removing or controlling slime, also prevents bacterial adhesion to surfaces of water-bearing systems and effects detachment of adhered bacteria.

The problem underlying the present invention is therefore to provide an enzymatic composition or enzyme with a broad range of action. Preferably the composition should also be capable of both preventing attachment of bacteria and detaching bacteria which are already adhered to the surfaces of the system. In particular, an agent should be provided which contains only one enzyme or a simple mixture of very few enzymes, respectively. Advantageously, the composition should not contain any biocide. The enzyme or enzymes should have an activity which allows the application of smaller amounts of enzymes than known for enzymes or enzyme mixtures in the state of the art.

The object of the present invention is therefore to make available a composition or a process for the avoidance of slime formation and for the removal of biofilm on surfaces of water-bearing systems which avoids the disadvantages of conventional biocides but achieves or exceeds their degree of effectiveness, respectively.

According to the invention, the problem is solved by a composition (anti-biofilm composition) comprising at least one mannanase, wherein the composition does not comprise nigeranase, α-mannanase and pullulanase.

Within the scope of the present invention, either a single mannanase is utilized or alternatively the mannanase is in the form of a composition comprising several mannanases.

According to the invention it has suprisingly been found that a composition comprising at least one mannanase has broad activity and is active against numerous microorganisms of different types.

In particular, the enzymatic composition comprises a single mannanase, which is most preferably a 1,4-β-D-mannan-mannohydrolase that randomly hydrolyzes β(1,4) bonds in mannans, galactomannans and glucomannans as e.g. Gamanase®, supplied by Novo Nordisk.

Within the scope of the present invention "mannanase" relates to mannohydrolase, which includes mannan mannohydrolase (i.e. endomannanase) as well as mannoside mannohydrolase (i.e. exo-mannanase). The term further includes mannohydrolases including all possible specificities, such as α, β, 1,2, 1,3, 1,4, 1,6, L, D. This means that mannanases are useful for the purposes of the present invention which cleave any mannose-containing polysaccharide at a bond involving at least one mannose sugar residue (e.g. EC 3.2.1.24, EC 3.2.1.25 etc.). Examples are Gamanase®, galactomannanase and Primalco mannanase, which are all commercially available mannanases.

According to a preferred embodiment of the present invention, an enzymatic composition is made available comprising at least one mannanase and at least one enzyme from the group consisting of proteases, lipases, and glycoproteases, wherein the composition does not comprise nigeranae, α-mannase and pullulanase.

In a preferred embodiment, the enzyme compositions may contain at least 4·10² mannanase U/kg, for example 4·10³ U/kg. Preferably, the mannanase(s) in the composition has (have) an activity of at least 4·10⁴ U/kg, more preferably 4·10⁵ U/kg and most preferably 4·10⁶ U/kg.

Proteases preferably combined with mannanase(s) according to this invention are serine proteases, metalloproteases, cysteine proteases and the like.

Lipases preferably combined with mannanase(s) according to this invention are carboxylic-ester hydrolase, aryl-ester hydrolase, glycerol-ester hydrolase and the like.

Glycoproteases preferably combined with mannanase(s) according to this invention are endo-β-N-acetylglucosaminidase D, endoglycosidase S, N-glycosidase F and endoglycosidase H, which all are supplied by Boehringer Mannheim.

If the mannanase(s) is(are) combined with at least one further enzyme from the above group, preferably at least one protease is used, advantageously an alkaline protease hydrolyzing a wide range of peptide bonds (e.g. Esperase®). The ratio of the two enzymes in the composition may vary from 1/99 to 99/1 : mannanase(s)/alkaline protease.

According to one embodiment of the present invention, the composition further comprises at least one enzyme stabilizing agent, a biodispersant, a biocide and/or a surfactant. Glycol components with biofilm removing properties, such as disclosed in German patent application 44 45 070.2, in particular diethylene glycol or propylene glycol, are further preferred additives.

Moreover, these agents can be combined with at least one additional enzyme from the group consisting of carbohydrases, proteases, lipases, glycoproteases.

A stabilizing agent, such as propylene glycol, other polyols, sugars, sugar alcohols or boric acid, will preserve the enzyme from microbial degradation, prevent irreversible denaturation and oxidation of the enzyme.

Biodispersants, such as sodium dodecyl benzene sulfonate, dodecyl dimethyl ammoniumchloride or ethoxy-propoxy block polymers, help to prevent slime build up or biofilm removal without killing the microbes by changing the surface energy of the biofilm, the water and/or the receiving surface.

Biocides are components which kill bacteria present in an industrial water conduit. Examples are isothiazolin-ones, methylene bis thiocyanate, sodium dimethyl dithiocarbamate, alkyl dimethylbenzylammoniumchloride, poly[oxyethylene(dimethylimino)ethylene(dimethylimino)ethylene dichloride], 2,2-dibromo-3-nitrilopropionamide, 1,3-bromo-nitro-2-propanediol, dithiol, peracids (e.g. HOCl, H₂O₂, peracetic acid).

Although it is the object of the present invention to provide a composition suitable for the prevention and/or the removal of biofilm on surfaces of water-bearing systems without the necessity of adding biocides to the system, the use of biocides might be required in cases where a thick slime layer is already present on the surfaces. In this instance, the combination of mannanase(s), optionally with at least one further enzyme from the group consisting of proteases, lipases and glycoproteases, with at least one biocide has been proven very effective in biofilm removal. However, the enzymatic composition of the present invention is preferably used without biocide and its effectiveness is comparable to the use of biocides alone, i.e. its activity is acceptable, but in contrast to biocides the composition of the present invention is non-toxic and biodegradable.

Within the scope of the present invention, the composition comprises at least one mannanase (either purified or in crude form), optionally in combination with other enzymes and/or additives (enzyme stabilizing agents, biodispersants, biocides and/or surfactants), preferably together with suitable carrier substances, and does not comprise nigeranase, α-mannanase and pullulanase.

The composition of the invention can be in any form suitable for adding to the water-bearing system, e.g. in liquid or dry form. In the dry state, the composition may be in the form of a powder or tablet, which can be prepared by lyophilization.

Although it is preferred that the composition of the invention comprises purified enzymes, optionally in combination with the above identified components, the enzymes can also be present in crude form. For example, the use of culture supernatants from enzyme expressing microorganisms containing mannanase(s) and/or enzymes from the group consisting of proteases, lipases, glycoproteases is possible.

In one embodiment of the invention, the composition comprising mannanase(s) is added to the water-bearing system in an amount resulting in a concentration of 1 - 1000 ppm, preferably 1 - 200 U/l, and most preferably 1 - 50 U/l. One unit (U) is defined as the amount of enzyme necessary to reduce the viscosity of a 0.2% mannan solution by 50% in 30 minutes at pH7 and 30°C. If the system to be treated has pH and temperature conditions different from those as defined before, it may be necessary to modify the amount of enzyme activity in order to obtain optimized biofilm treatment.

The combination of a mannanase, such as 1,4,-β-D-mannan-mannohydrolase, nad an alkaline protease is preferred and results in a synergic behaviour towards biofilm removal and the prevention of biofilm formation.

The composition of the invention containing mannanase(s), optionally in combination with other enzymes or agents may either be added at different points of the water bearing system or are at a single location. It is also possible to add the mannanase(s) containing compositions at one point and further enzymes and/or additional agents, such as biodispersant(s), biocide(s) and/or surfactant(s), at another or several other points. According to the invention, the addition of a single composition as described above, either in liquid or dry form (cf. above) is most preferred.

According to the present invention it has surprisingly been found that a composition comprising mannanase, i.e. a single carbohydrase, can be used for both controlling the adhesion of bacteria to a large extent and also for removing biofilm on surfaces of water-bearing systems. It was completely unexpected that this single carbohydrase, which is active against a homopolymer of mannose exerts high activity against EPS which is comprised of a large number of different heteropolysaccharides, as outlined above.

The advantage of the present invention therefore amongst others resides in the fact that already an interference with the very start of the biofouling process takes place, where the mannanase(s) prevent the adhesion of bacteria. In contrast, other carbohydrases normally develop their activity only from the point where substrate (EPS) has already been formed by bacteria adhered to the surfaces. Additionally, mannanase(s) is(are) capable of removing biofilm from the surfaces of water-bearing systems.

The fact that mannanase prevents the adhesion of bacteria is especially surprising because the role of EPS in the adhesion of microorganisms was doubted by several authors in the literature of the state of the art. On this background it was to be expected that a carbohydrase would have no effect on the adhesion process itself.

According to the present invention, it has further surprisingly been found that a synergistic effect with regard to slime removal and prevention of biofilm formation is achieved by combining mannanase(s) with protease(s).

The composition of the present invention is suitable for slime prevention and biofilm removal in any water-bearing system, i.e. either an open or closed industrial process-water system containing biofilm producing microorganisms. The use of the composition of the invention is especially well suited for open or closed water cycles in paper factories, in particular white water-bearing cycles, or for cooling cycles. Further, biofilm removal in industrial cooling water towers, water storage tanks, water distribution systems, pulp and paper mill water as well as ultrafiltration and dialysis membranes and in health care.

The present invention is explained below with reference to examples.

### Example 1

### Determination of mannanase activity of Gamanase® 1.5L

One unit is defined as the amount of enzyme necessary to reduce the viscosity of a 0.2 % mannan solution by 50 % in 30 minutes at pH 7 and 30°C. Under conditions where temperature, pH, ionic strength and salt composition deviate from the conditions of the following Example, the activity of the same amount of enzyme may differ from the activity measured under the standard conditions defined before.

The following are possible sources of mannan (these examples are intended to illustrate but not to limit the invention):
Konjac glucomannan
Locust Bean gum
Guar gum
Xanthan gum
LPS from *Pseudomonas diminuta* strain NCTC 8545
exocellular mannan from *Rhodotorula glutinis*
baker's yeast mannan.

In the specific case of Locust Bean Gum, an assay was carried out as follows:

A stock solution of Locust Bean Gum was prepared in Tris buffer (50 mM, pH 7). Substrate concentration in the assay was 2000 ppm. Enzyme stock solutions were prepared in a stabilizing buffer (1/100 of 52.5 g CaCl₂ and 1.21 g/l Tris, pH 7). 1 ml of enzyme stock solution was added to 9 ml substrate.

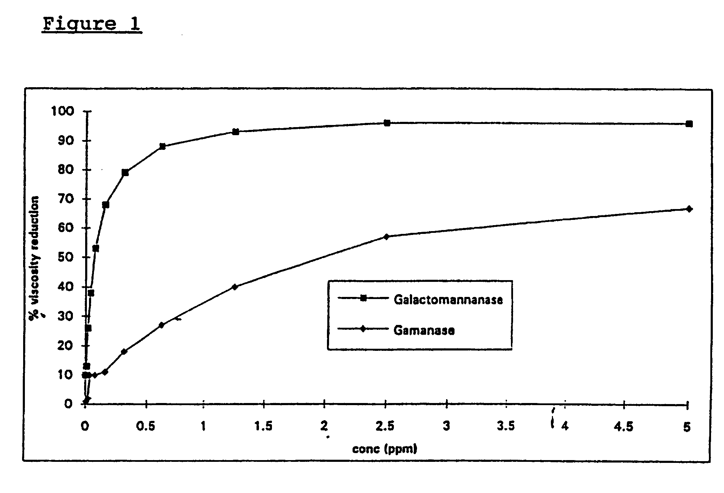

From each enzyme stock solution, a part was denatured by boiling for 15 minutes. The assay was done in test tubes, incubation for 30 minutes at 30°C. Enzyme hydrolysis was stopped by boiling for 15 minutes. Viscosity was measured with an Ubbelohde viscosimeter at 30°C. % viscosity reduction was calculated, taking into account the viscosity of water and the viscosity of the sample containing the inactivated enzyme. The result can be seen in Figure 1.

### Example 2

### Prevention of adhesion of bacteria to glass slides by Gamanase® 1.5L

The adhesion test was carried out as described by M. Fletcher, J. Gen. Microbiology 94 (1976), 400-404. Results can be seen in Table 1.

25 ppm of Gamanase 1.5L drastically reduces adhesion of *Pseudomonas fluorescens*, known to be present in the field slimes, with 61% compared to a control. Further a synergistic effect between proteases and mannanases can be observed. A combination of 12.5 ppm Gamanase and 12.5 ppm Esperase almost completely prevents the bacteria from adhering.

### Example 3

### Biofilm removal by Gamanase® 1.5L

A biofouling reactor containing tubes with stainless steel sections was inoculated with *Pseudomonas fluorescens* and CDC A-5 subgroup B, troublesome organisms isolated from paper mill slime samples. Operating conditions of the biofouling reactor can be seen in Table 2. After 70 hours of run time, a sufficient amount of biofilm was formed in the stainless steel sections. These sections were removed from the system, the outside was rinsed with sterile PBS and the sections were attached in large petridishes. Sterile PBS containing a certain concentration of the enzyme formulation was added. For each enzyme concentration, there was a heat-inactivated control. Petri-dishes were incubated for 3 or 24 hours at 40°C and 50 rpm. After incubation, sections were rinsed, dried and the weights of biofilm on sections treated with active enzyme were compared to the ones treated with the inactivated control. Results of one of the experiments are shown in Table 3. They indicated that only the enzyme lower concentrations give positive results. This was also seen in an adhesion assay with glass slides. 25 ppm of Gamanase removed 25% of the biofilm.

### Example 4

### 'Spottests': Effect of the Gamanase® 1.5L on EPS production on solid medium.

For this experiment, different bacteria isolated from paper mill slime were used: *Klebsiella pneumoniae* serotype 67, *Pseudomonas paucimabilis* and CDC A-5 subgroup B. These strains were inoculated on a solid media, stimulating EPS production. Holes were made in the agar, to which enzyme could be added. Table 4 represents an overview of the different commercially available enzymes tested.

For one set of experiments, the enzyme was added before the bacteria were grown. Clearing zones round the hole indicate inhibition of EPS formation by diffusion of the enzyme into the agar. This was the case for all 3 bacterial strains when Gamanase 1.5L (enzyme 10) was applied. Results are summarized in Table 5.

For a second set, the enzyme was added to the holes after the bacteria were allowed to grow and produce EPS. Appearance of clearing zones around the holes indicates the breakdown of the EPS by the enzyme. This was again the case for all 3 bacteria when using Gamanase 1.5L, but to a much greater extent for *Pseudomonas paucimobilis.* Results are presented in Table 6.

The above experiments demonstrate that mannanase(s) is(are) suitable for both prevention and degradation of EPS, i.e. prevention of bacterial adhesion and removal of biofilm from surfaces of water-bearing Systems. In addition, they show superior performance of mannanases over other enzymes.

### Example 5

### Evaluation of biocidal activities of the commercially available formulation Gamanase® 1.5L.

The purpose of this test was to investigate whether positive inhibition and removal results were not due to a lytic enzyme activity or to a preservative included in the enzyme formulation.

As inoculum, ± 10⁷ CFU/ml *Pseudomonas fluorescens* (CFU/ml means colony forming units per ml) was used. This inoculum was prepared by centrifugation of an overnight culture of the organism at 8000 rpm, 4°C for 5 minutes. The pellet was washed twice in phosphate buffered saline and resuspended and diluted to the required cell density. Concentrations of the enzyme formulation added ranged from 100 to 12.5 ppm. For each enzyme concentration, also a heat-inactivated control was tested. Incubation was two hours at 40°C and pH 7 (phosphate buffered saline). Samples were taken at t=0, 1 and 2 hours. The results are presented in Table 7. No biocidal activity of the enzyme can be concluded from this.

### Example 6

### Enzymatic hydrolysis of EPS isolated from a field slime sample and analysis with HPLC-PAD (High Performance Ion-Exchange Chromatography with Pulsed Amperometric Detection).

EPS was isolated from a field slime sample using acetone precipitation. This EPS was hydrolyzed with different commercial enzymes. The hydrolysis mixture was analyzed with HPLC-PAD and compared to a blank of the enzyme and the EPS. Concentration of monosaccharides released from the EPS was calculated. Peaks appearing in the oligosaccharide region of the chromatogram are expressed in area. Results can be seen in Table 8. Compared to the other enzymes, 1,4-β-D-mannan-mannohydrolase is very successful in hydrolysis of EPS.

### Example 7

### 1. Adhesion assays:

Gamanase® (Novo Nordisk) and pure galactomannanase (Fluka Chemicals) were evaluated in the adhesion assay using *Pseudomonas putida* as an example bacterium.

| enzyme | % inhibition |
|---|---|
| Gamanase® | 20 |
| galactomannanase | 19 |
| (Concentration of enzyme: 50 ppm) | |

### 2. Inhibition of biofouling by mannanase treatment:

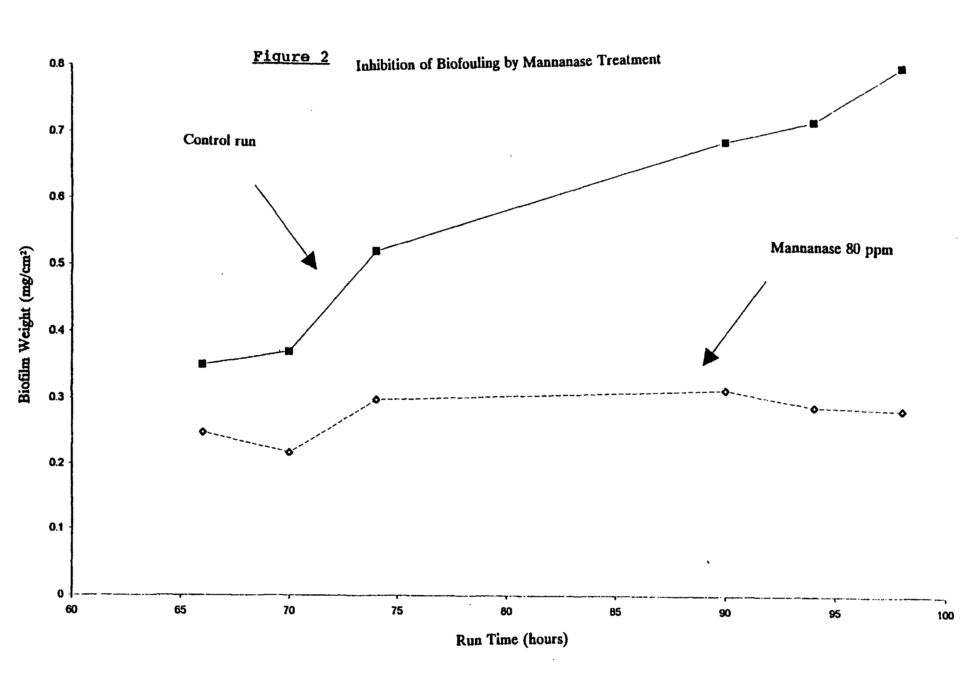

Biofilm was allowed to develop with or without the presence of mannanase. The biofilm weight was measured as a function of time. The result is shown in Figure 2. As a model for a mannanase, Primalco mannanase M-100, available from Primalco Ltd., Biotec, was used. Mannanase treatment resulted in 75% inhibition of biofilm formation.

### 3. Additional spot tests:

a) In order to evaluate whether the clearing zones in bacterial layers observed after application of mannanases is not limited to the bacteria presented in Table 5 of the application, Gamanase® 1.5L was spotted on a series of additional bacterial strains.
   Clearing zones were observed with bacteria isolated from paper mill slime (cf. Table 9). It is clear that the effect observed is not limited to a small selection of bacterial strains. See also Table 10.
b) Two mannanases were compared for their ability to create clearing zones on a number of bacteria (cf. Table 10). On most of the bacteria the presence of mannanase creates clearing zones. In some case differences between the two mannanases are observed but such that they show complementary behaviour.

### List of Tables and Figures

- Table 1:: Effect of Gamanase® 1.5L and Esperase on the adhesion of *Pseudomonas fluorescens* to glass slides.
- Table 2:: Operating conditions of biofouling test unit.
- Table 3:: Biofilm removal experiment with Gamanase® 1.5L.
- Table 4:: Activities of commercially available enzymes evaluated in "spot tests".
- Table 5:: Inhibition of EPS formation by commercially available enzymes.
- Table 6:: Degrading activity of commercially available enzymes against EPS.
- Table 7:: Kill test with Gamanase® 1.5L.
- Table 8:: Release of monosaccharides from EPS isolated from paper mill slime as detected with HPLC.
- Table 9:: Spot tests with Gamanase® 1.5L.
- Table 10:: The clearing zone effect of two different mannanases on a number of at random selected bacteria.
- Figure 1:: Viscosity reduction of Locust bean Gum by galactomannanases.
- Figure 2:: Inhibition of biofouling by mannanase treatment.

**Table 1**

| TREATMENT | Δ% vs. CONTROL |
|---|---|
| CONTROL | 0 |
| 25 ppm ESP. | -76 |
| 25 ppm GAM. | -61 |
| 12.5 ppm GAM. + | -93 |
| 12.5 ppm ESP. | |

### Table 2: Operating conditions of biofouling test unit.

### Fermentor conditions:

Inoculum:
*Pseudomonas fluorescens LMG 1794*
overnight culture in PBS pH7 + 20% glycerol
100 ml
aeration: 1 bar, 25%
500 rpm
TSB: 20 ml/h
dilution water: 80 ml/h
overflow to biofouling unit : 100 ml/h
D = 0.05/h
fermentor inoculation and upstart aeration 3 hours before rig upstart

### Biofouling test unit:

| Nutrient concentration (ppm): | |
|---|---|
| MgSO₄.7H₂O | 20 |
| CaCl₂.2H₂O | 240 |
| K₂HPO₄.3H₂O | 3 |
| NaHCO₃ | 36 |
| Glucose | 338 |
| Bacto Soytone | 20 |

D = 0.86/h
pH 7
30-35°C

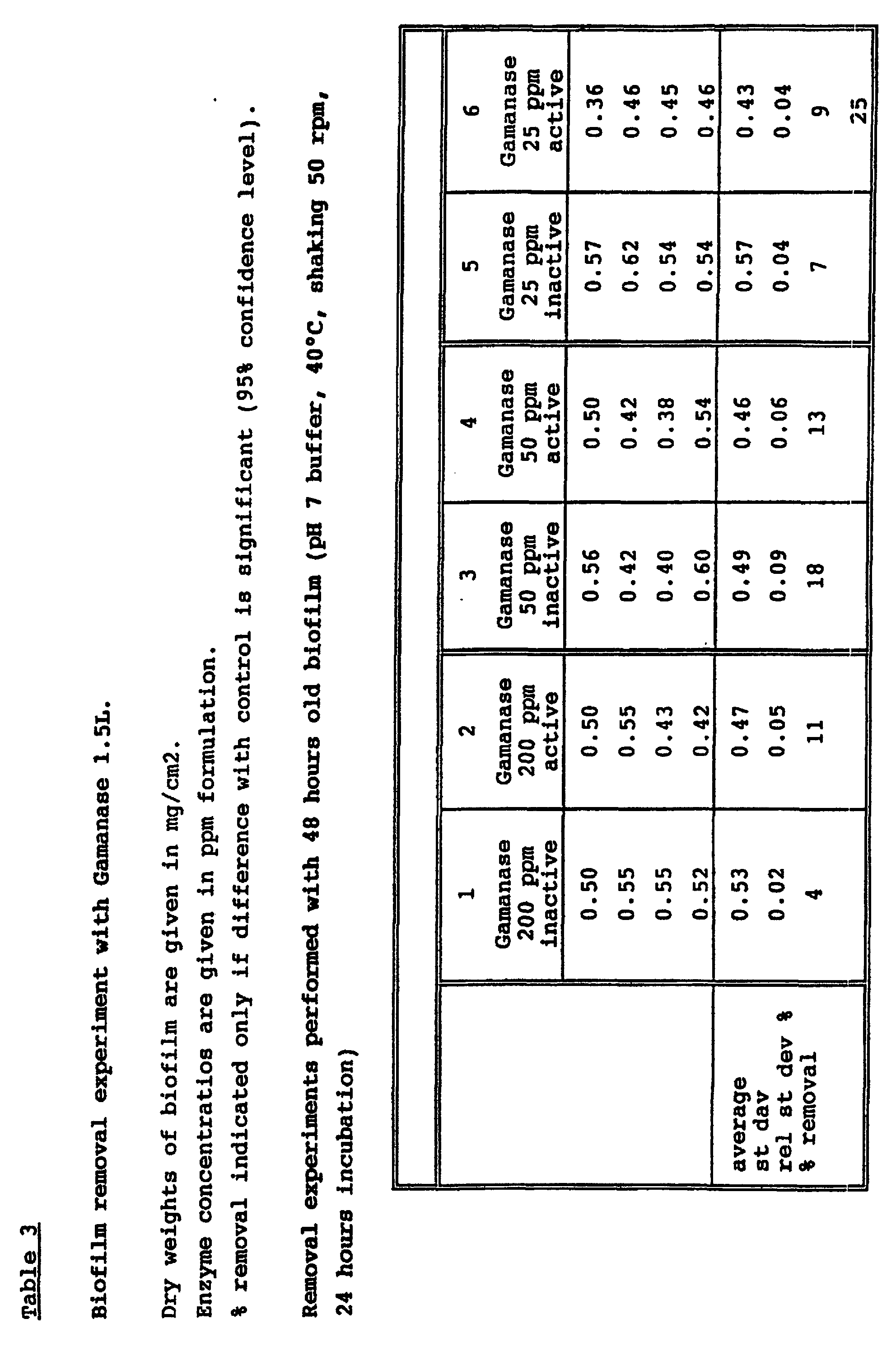

**Table 4**

| **Activities of commercially available enzymes evaluated in 'spot tests'.** | | | |
|---|---|---|---|
| Enzyme | Activity | Enzyme | Activity |
| Enzyme 1 | β-amylase | Enzyme 10 | galactomannosidase |
| Enzyme 3 | protease | Enzyme 11 | 1,3-α-glucanase |
| Enzyme 4 | α-amylase | Enzyme 12 | protease |
| Enzyme 5 | β-glucanase | Enzyme 13 | inulinase |
| Enzyme 8 | protease | Enzyme 16 | protease |
| Enzyme 9 | β-glucanase | | |

**Table 5**

| **Inhibition of EPS formation by commercially available enzymes** | | | |
|---|---|---|---|
| - : no clearing zone | | | |
| + : clearing zone | | | |

| Enzymes | *Klesiella pneumoniae* | CDC | *Pseudomonas* sp. I |
|---|---|---|---|
| Enzyme 1 | - | - | - |
| Enzyme 3 | - | + | + |
| Enzyme 4 | - | - | - |
| Enzyme 5 | - | - | - |
| Enzyme 8 | - | - | + |
| Enzyme 9 | + | + | - |
| Enzyme 10 | + | + | + |
| Enzyme 11 | - | - | - |
| Enzyme 12 | - | - | - |
| Enzyme 13 | - | + | - |
| Enzyme 16 | - | - | + |

**Table 6**

| **Degrading activity of commercially available enzymes against EPS.** | | | |
|---|---|---|---|
| - : no clearing zone | | | |
| +/- : small clearing zones | | | |
| + : obvious clearing zone | | | |
| ++ : large clearing zone | | | |

| Enzymes | *Klebsiella pneumoniae* | CDC | *Pseudomonas* sp.I paucimobilis |
|---|---|---|---|
| Enzyme 1 | - | - | - |
| Enzyme 3 | - | - | ++ |
| Enzyme 4 | - | - | - |
| Enzyme 5 | - | - | - |
| Enzyme 8 | - | - | ++ |
| Enzyme 9 | +/- | + | - |
| Enzyme 10 | + | + | ++ |
| Enzyme 11 | - | - | - |
| Enzyme 12 | - | - | +/- |
| Enzyme 13 | - | + | - |
| Enzyme 16 | - | - | + |

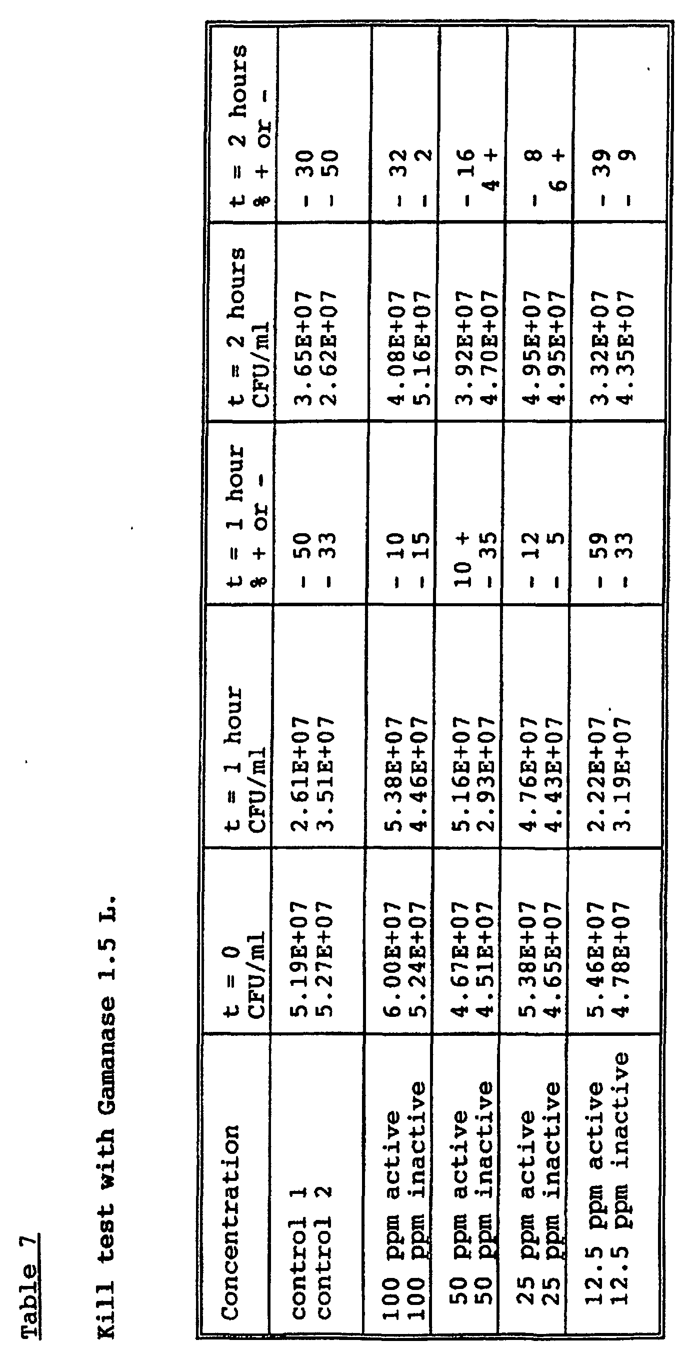

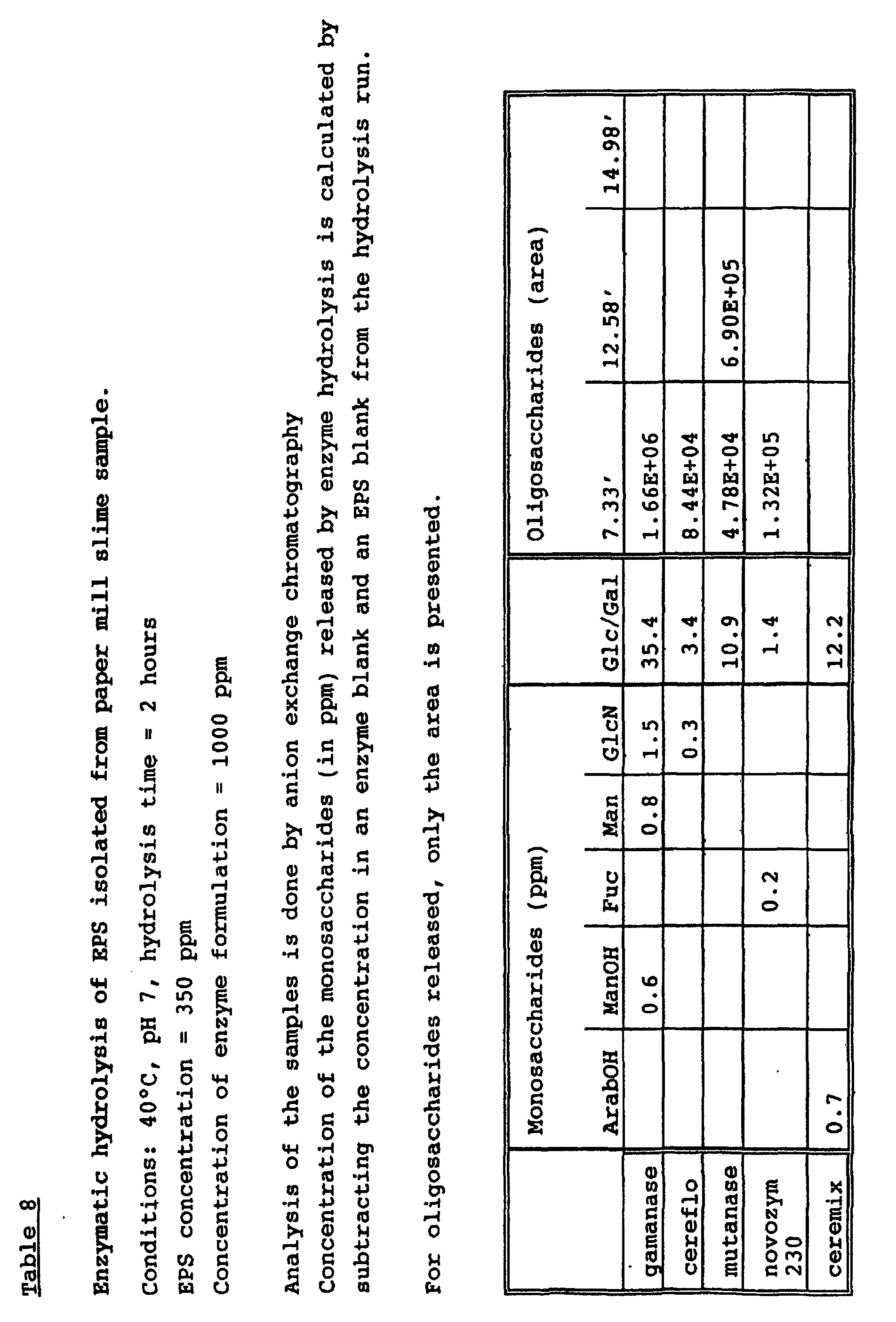

**Table 9:**

| **Spot tests with Gamanase® 1.5L.** | | | | |
|---|---|---|---|---|
| Sample No. | Bact No. | Biolog id | clearing zone | Remarks |
| 3 | 47 | Acinetobacter baumannii | halo | slime |
| 11 | 66 | unidentified | + | slightly slimy |
| 12 | 69 | Enterobacter | ± | no slime |
| 25 | 25A | Klebsiella pneumoniae | ++ | slime |
| 22 | B | Klebsiella terrigena | halo | slightly slimy |
| 22 | D | Klebsiella pneumoniae | + | slightly slimy |
| 27 | B | Pseudomonas mendocina | ++ | slime |
| 27 | C | Pseudomonas fluorescens | - | no slime/ slime |
| 23 | A | Enterobacter asburiae | +/± | no slime |
| 23 | B | Enterobacter asburiae | ±/- | slightly slimy/slime |

**Table 10:**

| **The clearing zone effect of two different mannanases on a number of at random selected bacteria.** | | | |
|---|---|---|---|
| | culture collection No | Gamanase | Galactomannanase |
| Pseudomonas aeruginosa | LMG 1242 | + | + |
| Flavimonas oryzihabitans | LMG 7040 | ++ | - |
| Klebsiella terrigena | LMG 3203 | ++ | ++ |
| Klebsiella pneumoniae type 3 | NCTC 9632 | - | + |
| Klebsiella oxytoca | LMG 3055 | ++ | + |
| Klebsiella terrigena | LMG 3222 | + | - |
| Klebsiella planticola | LMG 3065 | - | - |
| Klebsiella terrigena | LMG 3207 | ++ | + |
| Klebsiella pneumoniae | LMG 2095 | + | - |
| Klebsiella pneumoniae type 1 | NCTC 9617 | - | - |
| Pseudomonas vesicularis | LMG 2350 | ++ | - |
| Xanthomonas campestris | LMG 1459 | ++ | - |
| Bacillus subtilus | | + | ++ |
| Klebsiella pneumoniae type 2 | NCTC 7242 | - | - |
| Pseudomonas fluorescens | LMG 1794 | ++ | + |

## Claims

1. Composition for the prevention and/or the removal of biofilm on surfaces, **characterized in that** it comprises at least one mannanase, wherein the composition does not comprise nigeranase, α-mannanase and pullulanase.

2. Composition according to claim 1, **characterized in that** it comprises 1,4-β-D-mannan-mannohydrolase.

3. Composition according to claims 1 or 2, **characterized in that** it further comprises at least one enzyme selected from the group consisting of proteases, lipases and glycoproteases

4. Composition according to claim 3, **characterized in that** it comprises at least one protease.

5. Composition according to claim 4, **characterized in that** the protease is an alkaline protease.

6. Composition according to claims 1 to 5, **characterized in that** it comprises at least one enzyme stabilizing agent, biodispersant, biocide and/or surfactant.

7. Composition according to claims 1 to 6, **characterized in that** it is in liquid form.

8. Composition according to claims 1 to 6, **characterized in that** it is in dry form.

9. Use of the composition according to claims 1 to 8 for the prevention and/or the removal of biofilm on surfaces of water-bearing systems.

10. Use according to claim 9, **characterized in that** the water-bearing system is an open or closed industrial process-water system.

11. Use according to claim 10, **characterized in that** the industrial process-water system is an open or closed water cycle in a paper factory.

12. Use according to claim 9, **characterized in that** the surfaces are ultrafiltration or dialysis membranes.

13. Use according to claims 9 to 12, **characterized in that** the composition is added to the water in an amount resulting in a mannanase concentration of 0.1 - 1000 units/l.

14. Use according to claim 13, **characterized in that** the composition is added to the water in an amount resulting in a mannanase concentration of 1 - 200 units/l.

## Patentansprüche

1. Zusammensetzung zur Verhinderung und/oder Entfernung von Biofilm auf Oberflächen, **dadurch gekennzeichnet, daß** sie wenigstens eine Mannanase umfaßt, wobei die Zusammensetzung keine Nigeranase, α-Mannanase und Pullulanase umfaßt.

2. Zusammensetzung nach Anspruch 1, **dadurch gekennzeichnet, daß** sie 1,4-β-D-Mannan-mannohydrolase umfaßt.

3. Zusammensetzung nach den Ansprüchen 1 oder 2, **dadurch gekennzeichnet, daß** sie ferner wenigstens ein Enzym umfaßt, das aus der aus Proteasen, Lipasen und Glycoproteasen bestehenden Gruppe ausgewählt ist.

4. Zusammensetzung nach Anspruch 3, **dadurch gekennzeichnet, daß** sie wenigstens eine Protease umfaßt.

5. Zusammensetzung nach Anspruch 4, **dadurch gekennzeichnet, daß** die Protease eine alkalische Protease ist.

6. Zusammensetzung nach den Ansprüchen 1 bis 5, **dadurch gekennzeichnet, daß** sie wenigstens ein Enzymstabilisierendes Agens, Biodispergens, Biozid und/oder Surfactant umfaßt.

7. Zusammensetzung nach den Ansprüchen 1 bis 6, **dadurch gekennzeichnet, daß** sie in flüssiger Form vorliegt.

8. Zusammensetzung nach den Ansprüchen 1 bis 6, **dadurch gekennzeichnet, daß** sie in trockener Form vorliegt.

9. Verwendung der Zusammensetzung nach den Ansprüchen 1 bis 8 zur Verhinderung und/oder Entfernung von Biofilm auf Oberflächen wasserführender Systeme.

10. Verwendung nach Anspruch 9, **dadurch gekennzeichnet, daß** das wasserführende System ein offenes oder geschlossenes industrielles Prozeßwasser-System ist.

11. Verwendung nach Anspruch 9, **dadurch gekennzeichnet, daß** das industrielle Prozeßwasser-System ein offener oder geschlossener Wasserkreislauf in einer Papierfabrik ist.

12. Verwendung nach Anspruch 9, **dadurch gekennzeichnet, daß** die Oberflächen Ultrafiltrations- oder Dialysemembranen sind.

13. Verwendung nach den Ansprüchen 9 bis 12, **dadurch gekennzeichnet, daß** man die Zusammensetzung dem Wasser in einer Menge zugibt, die zu einer Mannanase-Konzentration von 0,1 - 1000 Einheiten/l führt.

14. Verwendung nach Anspruch 13, **dadurch gekennzeichnet, daß** man die Zusammensetzung dem Wasser in einer Menge zugibt, die zu einer Mannanase-Konzentration von 1 - 200 Einheiten/l führt.

## Revendications

1. Composition pour la prévention et/ou l'élimination de biofilm sur des surfaces, **caractérisée en ce qu'**elle comprend au moins une mannanase, dans laquelle la composition ne comprend pas de nigéranase, d'α-mannanase et de pullulanase.

2. Composition selon la revendication 1, **caractérisée en ce qu'**elle comprend la 1,4-β-D-mannohydrolase.

3. Composition selon les revendications 1 ou 2, **caractérisée en ce qu'**elle comprend en outre une enzyme choisie dans le groupe comprenant les protéases, les lipases et les glycoprotéases.

4. Composition selon la revendication 3, **caractérisée en ce qu'**elle comprend au moins une protéase.

5. Composition selon la revendication 4, **caractérisée en ce que** la protéase est une protéase alcaline.

6. Composition selon les revendications 1 à 5, **caractérisée en ce qu'**elle comprend au moins un agent stabilisant enzymatique, un biodispersant, un biocide et/ou un tensioactif.

7. Composition selon les revendications 1 à 6, **caractérisée en ce qu'**elle est sous forme liquide.

8. Composition selon les revendications 1 à 6, **caractérisée en ce qu'**elle est sous forme anhydre.

9. Utilisation de la composition selon les revendications 1 à 8 pour la prévention et/ou l'élimination de biofilm sur les surfaces de systèmes porteurs d'eau.

10. Utilisation selon la revendication 9, **caractérisée en ce que** le système porteur d'eau est un système de traitement de l'eau industriel ouvert ou fermé.

11. Utilisation selon la revendication 10, **caractérisée en ce que** le système de traitement de l'eau industriel est un cycle d'eau ouvert ou fermé dans une usine à papier.

12. Utilisation selon la revendication 9, **caractérisé en ce que** les surfaces sont des membranes d'ultrafiltration ou de dialyse.

13. Utilisation selon les revendications 9 à 12, **caractérisée en ce que** la composition est ajoutée à l'eau en une quantité donnant une concentration de mannanase de 0,1 à 1000 unités/l.

14. Utilisation selon la revendication 13, **caractérisée en ce que** la composition est ajoutée à l'eau en une quantité donnant une concentration de mannanase de 1 à 200 unités/l.
